# EUROPEAN PATENT SPECIFICATION

(11) **EP 3 628 470 B1**
(45) Date of publication and mention of the grant of the patent: **07.06.2023**
(21) Application number: 18200008.3
(22) Date of filing: 12.10.2018
(51) Int. Cl.: B29C 57/04, B21D 41/02, B29K 305/02

(54) **EXPANDER TOOL**
AUFWEITWERKZEUG
OUTIL D'ÉLARGISSEMENT

(30) Priority: 27.09.2018 FI 20185806
(43) Date of publication of application: 01.04.2020
(73) Proprietor: Uponor Innovation AB, 760 61 Virsbo (SE)
(72) Inventor: Adelman, Duane, Lakeville, MN 55044 (US)
(74) Representative: Papula Oy

(56) References cited:
- WO-A1-2011/056065
- DE-A1- 19 504 968
- US-A- 3 888 102
- US-A1- 2004 253 340

## Description

### FIELD OF THE INVENTION

The present invention relates to expander tool for expanding an end of a pipe.

### BACKGROUND OF THE INVENTION

In prior art, e.g. from US 3888102, is known an expander tool for expanding an end of a pipe. The expander tool comprises a tool head which comprises expanding means arranged to be insertable inside the end of the pipe for expanding the end of the pipe. The expanding means comprise a plurality of spreading elements. The spreading elements are radially movable in relation to a center longitudinal axis of the tool head between a starting position, at which the spreading elements are close along said axis and insertable into the end of the pipe, to an outwardly extended expansion position radially distanced from said axis so as to expand the end of the pipe. Each of the spreading elements has an outer spreading surface which is an nth part of a cylinder surface, wherein n is the number of the spreading elements. The outer spreading surfaces are configured to press against an interior surface of the end of the pipe. The expander tool comprises a piston configured to spread the spreading elements from the starting position to the expansion position by moving along said axis from a retracted piston position to a fully extended piston position against interior surfaces of the spreading elements. The expander tool further comprises an actuator for moving the piston.

DE 19504968 A1 discloses an expanding tool comprising an expandible mandrel with expanding members having a recess thereon. WO 2011/056065 A1 discloses a device for forming a flared hoop, the device comprising an expandable mandrel with flared ends. US 2004/253340 A1 discloses an expansion tool with a cylindrical end piece with radially movable jaws, where a spring is placed in a groove formed on the outer surface of the jaws.

The spreading elements may form deformations on the inner surface of the expanded pipe. These deformations may reduce sealing between the pipe and a fitting to be inserted inside the expanded pipe end.

### OBJECTIVE OF THE INVENTION

The objective of the invention is to provide an improvement to the expander tool.

In particular, it is an objective of the present invention to provide an expander tool which can form an undamaged and intact sealing area to the inner surface of the expanded pipe to provide improved sealing between the pipe and a pipe fitting to be inserted inside the pipe end.

### SUMMARY OF THE INVENTION

According to an aspect, the present invention provides an expander tool for expanding an end of a pipe made of plastics having shape memory. The expander tool comprises a tool head. The tool head comprises expanding means arranged to be insertable inside the end of the pipe for expanding the end of the pipe. The expanding means comprise a plurality of spreading elements. The spreading elements are radially movable in relation to a center longitudinal axis of the tool head between a starting position, at which the spreading elements are close along said axis and are insertable into the end of the pipe, to an outwardly extended expansion position radially distanced from said axis so as to expand the end of the pipe. Each of the spreading elements has an outer spreading surface which is an nth part of a cylinder surface, wherein n is the number of the spreading elements. The outer spreading surfaces are configured to press against an interior surface of the end of the pipe for expanding the end of the pipe. The expander tool comprises a piston configured to spread the spreading elements from the starting position to the expansion position by moving along said axis from a retracted piston position to a fully extended piston position against interior surfaces of the spreading elements, and an actuator for moving the piston. According to the invention the outer spreading surfaces comprise a circumferential groove, said groove leaving an undamaged smooth and intact sealing surface to the inner surface of the expanded pipe; the outer spreading surfaces comprise at least two circumferential grooves at a distance from each other; the spreading elements comprise a stop face against which the end of the pipe to be expanded can be placed; and the outer spreading surfaces comprise a circumferential groove disposed near to the stop face, said groove leaving an undamaged smooth and intact sealing surface to the inner surface of the expanded pipe at the end of the pipe.

The technical effect of the invention is that a sealing barb of a pipe fitting which will be inserted into the expanded pipe end can seal tightly against the undamaged sealing surface.

In an embodiment of the expander tool, the expander tool comprises a tool frame. The tool head comprises a head frame which is detachably attachable to the tool frame.

In an embodiment of the expander tool, the tool frame comprises an outer thread. The head frame comprises an inner thread adapted to be threaded into the outer thread for detachable attachment of the head frame to the tool frame.

In an embodiment of the expander tool, the spreading element comprises a guide flange. The head frame is a ring comprising a radial inner guide slot adapted to receive the guide flange radially movable in guidance of the guide slot relative to head frame.

In an embodiment of the expander tool, the guide flange comprises a peripheral groove to receive an elastic O-ring therein. The O-ring acts as a returning spring for returning the spreading elements to the starting position.

In an embodiment of the expander tool, the piston comprises a plunger portion having a conical outer surface, and the spreading elements comprise inner surfaces matching with the shape of the conical outer surface.

In an embodiment of the expander tool, the spreading elements have a conical end portion.

It is to be understood that the aspects and embodiments of the invention described above may be used in any combination with each other. Several of the aspects and embodiments may be combined together to form a further embodiment of the invention.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Figure 1 is an axonometric view of a tool head of the expander tool according to a first embodiment of the invention, the spreading elements being at a starting position,
Figure 2 shows the tool head of Figure 1 in a position where the spreading elements are moved to an expansion position,
Figure 3 is a side view of an expander tool according to one embodiment of the invention, the expander tool being shown as a partial longitudinal section, the tool head being detached,
Figure 4 is a side of the expander tool of Figure 2 the tool head being attached and the spreading elements being at a starting position inserted to the an end of a pipe,
Figure 5 shows the expander tool of Figure 4 the spreading elements being moved to an expansion position,
Figure 6 shows an expander tool according to a second embodiment of the invention,
Figure 7 shows an enlarged longitudinal section of a pipe and a reinforcing ring both been expanded simultaneously with the expander tool of Figure 6, shown in an expanded position, and a pipe fitting inserted into the pipe, and
Figure 8 shows the pipe and the reinforcing ring of

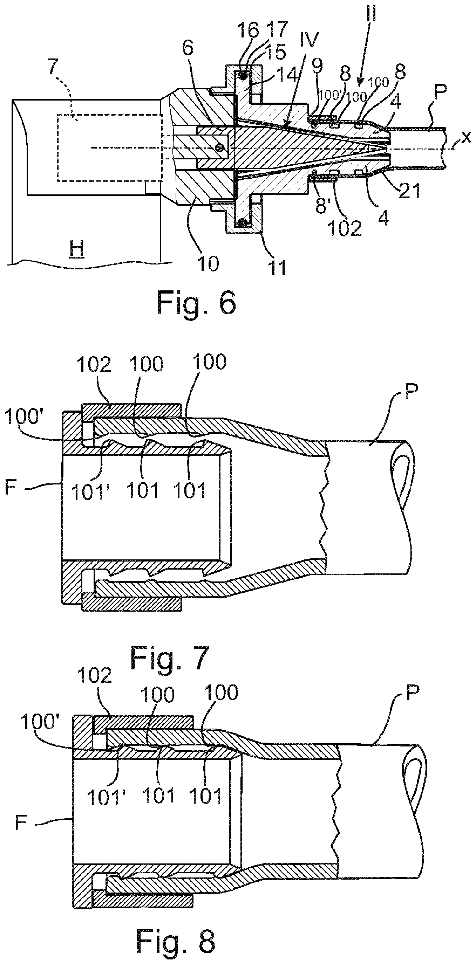

Figure 7 in a collapsed position.

### DETAILED DESCRIPTION OF THE INVENTION

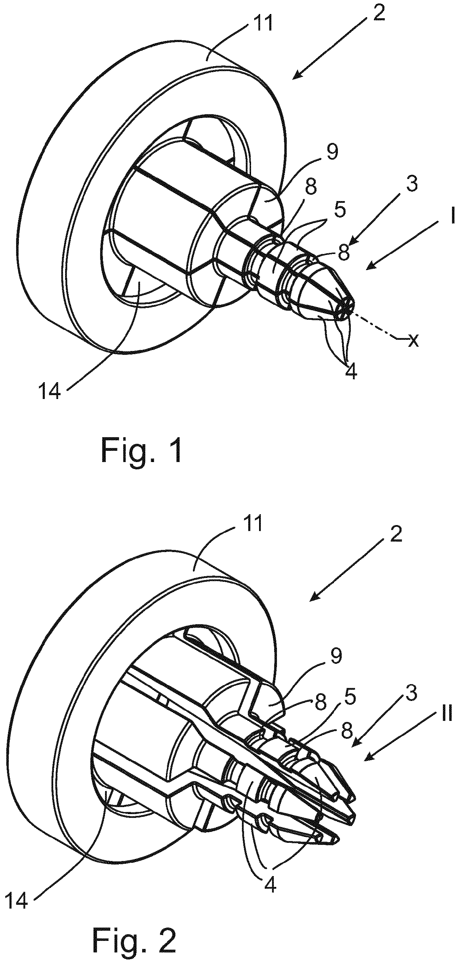

Figures 1 to 5 show an expander tool 1 for expanding an end of a pipe. Especially the expander tool 1 is adapted to expand a pipe made of plastics having shape memory. The expander tool 1 is designed and especially suitable to expand the end of the pipes used in plumbing applications. Such pipes include pipes having shape memory capacity, such as pipes made of PE (polyethylene), PEX (cross-linked polyethylene), PE-RT (Polyethylene of Raised Temperature resistance), UHMWPE (Ultra-high-molecular-weight polyethylene) which, after being expanded, have a shrinking speed which depends on the temperature of the pipe. The expander tool 1 can also be used to expand SACP (Seamless aluminium composite pipe) although it does not have the shape memory capacity. SACP pipe is built up from two concentric plastic layers with an intermediate seamless layer of aluminum and all these three layers are attached to each other by adhesive layers. The tool device is also suitable for expanding the ends of metal pipes, such as copper pipes. The expander tool 1 is preferably a handheld power tool having a handle H by which the operator can hold the expander tool by hand to perform the expansion operation.

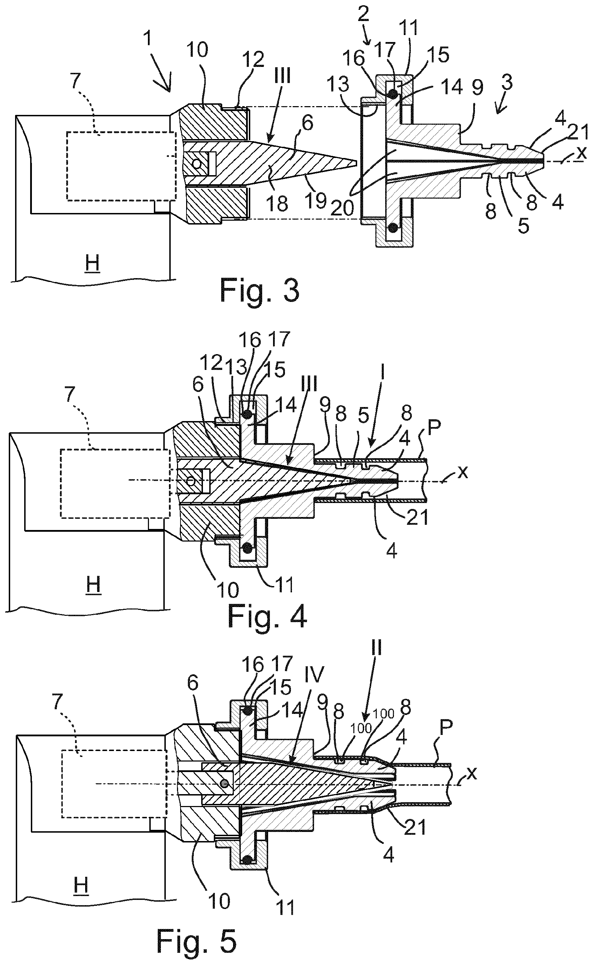

Further referring to Figures 1 to 5, the expander tool comprises a tool head 2 which comprises expanding means 3 arranged to be insertable inside the end of the pipe for expanding the end of the pipe. In the shown example, the expanding means 3 is formed of six spreading elements 4. The spreading elements 4 are radially movable in relation to a center longitudinal axis x of the tool head 2 between a starting position I (Figures 1 and 4) at which the spreading elements 4 are close along axis x and are insertable into the end of the pipe P, to an outwardly extended expansion position II (Figures 2 and 5) radially distanced from said axis x so as to expand the end of the pipe. Each of the spreading elements 4 have an outer spreading surface 5 configured to press against an interior surface of the end of the pipe. The expander tool 1 further comprises a piston 6 configured to spread the spreading elements 4 from the starting position I to the expansion position II by moving along the axis x from a retracted piston position III shown in Figure 4 to a fully extended piston position IV of Figure 5 against interior surfaces of the spreading elements 13. The expander tool further comprises an actuator 7 for moving the piston 6. The actuator 7 can be for example a hydraulic cylinder whereby the handle may contain equipment such as a rechargeable battery, a hydraulic pump to produce hydraulic pressure for the hydraulic cylinder, an electric motor for driving the hydraulic pump and an on-off switch, which can be operated by the operator to control the operation of the tool.

The expander tool 1 comprises a tool frame 10 and the tool head 2 comprises a head frame 11 which is detachably attachable to the expander tool frame 10. The tool frame 10 comprises an outer thread 12. The head frame 11 comprises an inner thread 13 adapted to be threaded into the outer thread 12 for detachable attachment of the head frame to the tool frame. The expander tool 1 preferably comprises a set of interchangeable and detachably attachable tool heads 2 for different pipe diameters.

The outer spreading surfaces 5 of the spreading elements 4 comprise a circumferential groove 8. In the shown embodiment there are two grooves 8 at a distance from each other. The groove 8 leaves an undamaged smooth and intact circumferential sealing surface 100 to the inner surface of the expanded pipe P. Referring also to Figures 7 and 8, when the pipe is made of plastics having shape memory, after expansion, when the pipe P retracts and shrinks down, i.e. collapses,, the sealing surface 100 is the first area to make contact on the pipe fitting F inserted to the end of the pipe applying full compressive load between the sealing barb 101 on the fitting F and the sealing surface 100 of the pipe. The result is tight sealing between the pipe P and the pipe fitting F.

The spreading elements 4 comprise a stop face 9 against which the end of the pipe P to be expanded can be placed, as shown in Figure 4.

The spreading element 4 comprises a guide flange 14. The head frame 11 is a ring comprising a radial inner guide slot 15 adapted to receive the guide flange 14 radially movable in guidance of the guide slot 15 relative to head frame. The guide flange 14 comprises a peripheral groove 16 to receive an elastic O-ring 17 therein. The O-ring 17 acts as a returning spring for returning the spreading elements 4 to the starting position I.

Referring to Figure 3, the piston 6 comprises a plunger portion 18 having a conical outer surface 19. The spreading elements 4 comprise inner surfaces 20 matching with the shape of the conical outer surface (19).

The spreading elements 4 have a conical end portion 21. The conical end portion 21 is angled and designed to minimize stress and deformation on the pipe during the expansion process.

Figure 6 shows an expander tool as described above referring to Figures 1 to 5 with the exception that in the expander tool of Figure 6 the outer spreading surfaces 5 comprises a circumferential groove 8' disposed near to the stop face 9. The groove 8'leaves an undamaged smooth and intact sealing surface 100' to the inner surface of the expanded pipe P at the end of the pipe. Figure 6 also shows that a reinforcing ring 102 made of plastics having shape memory can be expanded together with the pipe P.

Figure 7 shows the pipe P and the reinforcing ring 102 in an expanded position after being expanded with the expander tool of Figure 6. In the expanded position of the pipe P, a pipe fitting F can be inserted into the pipe P. The pipe fitting F comprises three sealing barbs 101, 101' corresponding to the three undamaged smooth and intact sealing surfaces 100, 100' of the inner surface of the expanded pipe P. As can be seen in Figures 7 and 8, the sealing barb 101' is adapted to be engaged at a position behind the inner edge of sealing surface 100' located nearest to the end of the pipe. This sealing barb 101' acts as a retainer. The other two sealing barbs 101 of the pipe fitting F are aligned with the other two undamaged smooth and intact sealing surfaces 100 of the pipe and are pressed against them to form a proper and tight sealing.

## Claims

1. An expander tool (1) for expanding an end of a pipe, the expander tool comprising a tool head (2) which comprises expanding means (3) arranged to be insertable inside the end of the pipe (P) for expanding the end of the pipe, the expanding means (3) comprising a plurality of spreading elements (4), the spreading elements (4) being radially movable in relation to a center longitudinal axis (x) of the tool head (2) between a starting position (I), at which the spreading elements (4) are close along said axis (x) and are insertable into the end of the pipe, to an outwardly extended expansion position (II) radially distanced from said axis (x) so as to expand the end of the pipe, each of the spreading elements (4) having an outer spreading surface (5) which is an nth part of a cylinder surface, wherein *n* is the number of the spreading elements, said outer spreading surfaces (5) being configured to press against an interior surface of the end of the pipe (P), the expander tool (1) comprising a piston (6) configured to spread the spreading elements (4) from the starting position (I) to the expansion position (II) by moving along said axis (x) from a retracted piston position (III) to a fully extended piston position (IV) against interior surfaces of the spreading elements (4), and an actuator (7) for moving the piston (6), **characterized in that** the outer spreading surfaces (5) comprise a circumferential groove (8, 8'), said groove leaving an undamaged smooth and intact sealing surface (100, 100') to the inner surface of the expanded pipe (P), the outer spreading surfaces (5) comprise at least two circumferential grooves (8, 8') at a distance from each other, and that the spreading elements (4) comprise a stop face (9) against which the end of the pipe (P) to be expanded can be placed and the outer spreading surfaces (5) comprises a circumferential groove (8') disposed near to the stop face (9), said groove (8') leaving an undamaged smooth and intact sealing surface (100') to the inner surface of the expanded pipe (P) at the end of the pipe.

2. The expander tool according to claim 1, **characterized in that** the expander tool (1) comprises a tool frame (10) and the tool head (2) comprises a head frame (11) which is detachably attachable to the tool frame.

3. The expander tool according to claim 2, **characterized in that** the tool frame (10) comprises an outer thread (12), and the head frame (11) comprises an inner thread (13) adapted to be threaded into the outer thread (12) for detachable attachment of the head frame to the tool frame.

4. The expander tool according to claim 2 or 3, **characterized in that** the spreading elements (4) comprises a guide flange (14), and the head frame (11) is a ring comprising a radial inner guide slot (15) adapted to receive the guide flange (14) radially movable in guidance of the guide slot (15) relative to head frame.

5. The expander tool according to claim 4, **characterized in that** the guide flange (14) comprises a peripheral groove (16) to receive an elastic O-ring (17) therein, the O-ring acting as a returning spring for returning the spreading elements (4) to the starting position (I).

6. The expander tool according to any one of the claims 1 to 5, **characterized in that** the piston (6) comprises a plunger portion (18) having a conical outer surface (19), and the spreading elements (4) comprise inner surfaces (20) matching with the shape of the conical outer surface (19).

7. The expander tool according to any one of the claims 1 to 6, **characterized in that** the spreading elements (4) have a conical end portion (21).

## Patentansprüche

1. Aufweitwerkzeug (1) zum Aufweiten eines Rohrendes, wobei das Aufweitwerkzeug einen Werkzeugkopf (2) umfasst, der Aufweitmittel (3) umfasst, die so angeordnet sind, dass sie in das Innere des Rohrendes (P) eingeführt werden können, um das Rohrende aufzuweiten, wobei die Aufweitmittel (3) eine Vielzahl von Spreizelementen (4) umfassen, wobei die Spreizelemente (4) in Bezug auf eine Mittellängsachse (x) des Werkzeugkopfes (2) radial zwischen einer Ausgangsposition (I) in der die Spreizelemente (4) entlang der Achse (x) nahe beieinander liegen und in das Ende des Rohres einführbar sind, zu einer nach außen verlängerten Expansionsposition (II), die radial von der Achse (x) beabstandet ist, um das Ende des Rohres zu expandieren, radial bewegbar sind, wobei jedes der Spreizelemente (4) eine äußere Spreizfläche (5) aufweist, die ein n-ter Teil einer Zylinderfläche ist, wobei n die Anzahl der Spreizelemente ist, wobei die äußeren Spreizflächen (5) so konfiguriert sind, dass sie gegen eine Innenfläche des Endes des Rohres (P) drücken, das Expansionswerkzeug (1) einen Kolben (6) umfasst, der so konfiguriert ist, dass er die Spreizelemente (4) von der Ausgangsposition (I) in die Expansionsposition (II) spreizt, indem er sich entlang der Achse (x) von einer zurückgezogenen Kolbenposition (III) zu einer vollständig ausgefahrenen Kolbenposition (IV) gegen Innenflächen der Spreizelemente (4) bewegt, und ein Stellglied (7) zum Bewegen des Kolbens (6), **dadurch gekennzeichnet, dass** die äußeren Spreizflächen (5) eine Umfangsnut (8, 8') aufweisen, wobei die Nut eine unbeschädigte glatte und intakte Dichtfläche (100, 100') zur Innenfläche des aufgeweiteten Rohres (P) hinterlässt, die äußeren Spreizflächen (5) mindestens zwei Umfangsnuten (8, 8') in einem Abstand voneinander aufweisen und dass die Spreizelemente (4) eine Anschlagfläche (9) aufweisen, gegen die das Ende des aufzuweitenden Rohres (P) angesetzt werden kann, und die äußeren Spreizflächen (5) eine Umfangsnut (8') aufweisen, die in der Nähe der Anschlagfläche (9) angeordnet ist, wobei die Nut (8') eine unbeschädigte glatte und intakte Dichtfläche (100') an der Innenfläche des aufgeweiteten Rohres (P) am Ende des Rohres hinterlässt.

2. Aufweitwerkzeug nach Anspruch 1, **dadurch gekennzeichnet, dass** das Aufweitwerkzeug (1) einen Werkzeugrahmen (10) und der Werkzeugkopf (2) einen am Werkzeugrahmen abnehmbar befestigten Kopfrahmen (11) aufweist.

3. Aufweitwerkzeug nach Anspruch 2, **dadurch gekennzeichnet, dass** der Werkzeugrahmen (10) ein Außengewinde (12) und der Kopfrahmen (11) ein Innengewinde (13) aufweist, das in das Außengewinde (12) zur lösbaren Befestigung des Kopfrahmens am Werkzeugrahmen eingeschraubt werden kann.

4. Aufweitwerkzeug nach Anspruch 2 oder 3, **dadurch gekennzeichnet, dass** die Spreizelemente (4) einen Führungsflansch (14) aufweisen und der Kopfrahmen (11) ein Ring ist, der einen radialen inneren Führungsschlitz (15) aufweist, der zur Aufnahme des Führungsflansches (14) geeignet ist, der in Führung des Führungsschlitzes (15) relativ zum Kopfrahmen radial beweglich ist.

5. Aufweitwerkzeug nach Anspruch 4, **dadurch gekennzeichnet, dass** der Führungsflansch (14) eine Umfangsnut (16) zur Aufnahme eines elastischen O-Rings (17) aufweist, der als Rückstellfeder für die Rückführung der Spreizelemente (4) in die Ausgangsstellung (I) dient.

6. Aufweitungswerkzeug nach einem der Ansprüche 1 bis 5, **dadurch gekennzeichnet, daß** der Kolben (6) einen Plungerteil (18) mit einer konischen Außenfläche (19) aufweist und die Spreizelemente (4) Innenflächen (20) aufweisen, die der Form der konischen Außenfläche (19) entsprechen.

7. Aufweitwerkzeug nach einem der Ansprüche 1 bis 6, **dadurch gekennzeichnet, daß** die Spreizelemente (4) einen konischen Endabschnitt (21) aufweisen.

## Revendications

1. Outil d'expansion (1) servant à élargir une extrémité d'un tuyau, l'outil d'expansion comprenant une tête d'outil (2) qui comprend des moyens d'expansion (3) conçus de manière à pouvoir être insérés dans l'extrémité du tuyau (P) afin d'élargir celle-ci, les moyens d'expansion (3) comprenant une pluralité d'éléments d'écartement (4), les éléments d'écartement (4) étant mobiles radialement par rapport à un axe longitudinal central (x) de la tête d'outil (2) entre une position de départ (I), dans laquelle les éléments d'écartement (4) sont à proximité dudit axe (x), le long de celui-ci, et peuvent être insérés dans l'extrémité du tuyau, dans une position d'expansion saillante extérieure (II), radialement à distance dudit axe (x), de manière à élargir l'extrémité du tuyau, chacun des éléments d'écartement (4) ayant une surface d'écartement externe (5) qui est une énième partie d'une surface de cylindre, n étant le nombre d'éléments d'écartement, lesdites surfaces d'écartement externes (5) étant configurées pour exercer une pression sur une surface intérieure de l'extrémité du tuyau (P), l'outil d'expansion (1) comprenant un piston (6) configuré de manière à écarter les éléments d'écartement (4) à partir de la position de départ (I) vers la position d'expansion (II) par déplacement le long dudit axe (x) à partir d'une position de piston rétracté (III) vers une position de piston entièrement déployé (IV) contre des surfaces internes des éléments d'écartement (4) et un actionneur (7) pour déplacer le piston (6), **caractérisé en ce que** les surfaces d'écartement externes (5) comprennent une rainure circonférentielle (8, 8'), ladite rainure laissant une surface d'étanchéité non endommagée, lisse et intacte (100, 100') sur la surface interne élargie du tuyau (P), les surfaces d'écartement externes (5) comprennent au moins deux rainures circonférentielles (8, 8') distancées l'une par rapport à l'autre et **en ce que** les éléments d'écartement (4) comprennent une surface de butée (9) contre laquelle peut être placée l'extrémité du tuyau (P) à élargir et les surfaces d'écartement externes (5) comprennent une rainure circonférentielle (8') disposée à proximité de la surface de butée (9), ladite rainure (8') laissant une surface d'étanchéité non endommagée, lisse et intacte (100') sur la surface interne élargie du tuyau (P) à l'extrémité de celui-ci.

2. Outil d'expansion suivant la revendication 1, **caractérisé en ce que** l'outil d'expansion (1) comprend un châssis d'outil (10) et la tête d'outil (2) comprend un châssis de tête (11) qui peut être fixé de manière amovible sur le châssis d'outil.

3. Outil d'expansion suivant la revendication 2, **caractérisé en ce que** le châssis d'outil (10) comprend un filetage extérieur (12), et le châssis de tête (11) comprend un filetage intérieur (13) adapté à être vissé dans le filetage extérieur (12) pour une fixation amovible du châssis de tête dans le châssis d'outil.

4. Outil d'expansion suivant la revendication 2 ou 3, **caractérisé en ce que** les éléments d'écartement (4) comprennent une bride de guidage (14) et le châssis de tête (11) est un anneau comprenant une fente de guidage intérieure radiale (15) adaptée à recevoir la bride de guidage (14) radialement mobile sous le guidage de la fente de guidage (15) par rapport au châssis de tête.

5. Outil d'expansion suivant la revendication 4, **caractérisé en ce que** la bride de guidage (14) comprend une rainure périphérique (16) servant à recevoir un anneau élastique (17), l'anneau agissant comme un ressort de rappel pour rappeler les éléments d'écartement (4) vers la position de départ (I).

6. Outil d'expansion suivant une des revendications 1 à 5, **caractérisé en ce que** le piston (6) comprend une partie plongeur (18) ayant une surface externe conique (19), et les éléments d'écartement (4) comprennent des surfaces internes (20) correspondant à la forme de la surface externe conique (19).

7. Outil d'expansion suivant une des revendications 1 à 6, **caractérisé en ce que** les éléments d'écartement (4) ont une partie d'extrémité conique (21).
